# EUROPEAN PATENT SPECIFICATION

(11) **EP 4 621 546 B1**
(45) Date of publication and mention of the grant of the patent: **10.06.2026**
(21) Application number: 24185096.5
(22) Date of filing: 27.06.2024
(51) Int. Cl.: G06F 3/12, G06K 15/00

(54) **INFORMATION PROCESSING SYSTEM, INFORMATION PROCESSING PROGRAM, AND INFORMATION PROCESSING METHOD**
INFORMATIONSVERARBEITUNGSSYSTEM, INFORMATIONSVERARBEITUNGSPROGRAMM UND INFORMATIONSVERARBEITUNGSVERFAHREN
SYSTÈME DE TRAITEMENT D'INFORMATIONS, PROGRAMME DE TRAITEMENT D'INFORMATIONS ET PROCÉDÉ DE TRAITEMENT D'INFORMATIONS

(30) Priority: 22.03.2024 JP 2024047163
(43) Date of publication of application: 24.09.2025
(73) Proprietor: FUJIFILM Business Innovation Corp., Minato-ku Tokyo (JP)
(72) Inventor: MISAWA, Satoshi, Yokohama-shi, Kanagawa (JP)
(74) Representative: Kurig, Thomas

(56) References cited:
- JP-A- 2013 025 109
- JP-B2- 4 457 700

## Description

### BACKGROUND OF THE INVENTION

### (i) Field of the Invention

The present invention relates to an information processing system, an information processing program, and an information processing method.

### (ii) Description of Related Art

JP2022-075666A discloses an image inspection device including an image inspection control unit that inspects an abnormality in a printed material by comparing a normal image prepared in advance with an image obtained by reading a printed image, in which the image inspection control unit generates a plurality of normal images based on a combination of a reusable object in variable printing and disposition information of a variable unique object.

In addition, JP2016-061659A discloses a printed material inspection device that including: a master image generating unit that for each original image of each page configuring the printed material, generates a first master image and a second master image having a lower resolution than the first master image based on the original image; a reading unit that reads the printed material and generates a first inspection image and a second inspection image having a lower resolution than the first inspection image for each page; a search unit that searches for a second master image similar to the second inspection image from among the plurality of second master images for each second inspection image; and an inspection unit that compares, for each first inspection image, the first inspection image with a first master image of a second master image similar to a second inspection image of the first inspection image, and inspects the quality of the printed material.

Patent document JP4457700 discloses page error inspection apparatus in a printing system, which determines whether a page of the original document image data acquired form the printer satisfies a specific page integrity rule, based on code information in the inspection area in the image data.

### SUMMARY OF THE INVENTION

An object of the present invention is to enable inspection of a printing quality of a next printed material even in a case where a printed material is missing in a case where the printing quality of a plurality of printed materials is inspected in a printing order, based on a normal image selected in sequence from the plurality of normal images.

According to a first aspect of the present invention, there is provided an information processing system including: a processor configured to: determine, in a case where normal page identification information in one normal image selected in sequence from a plurality of normal images matches inspection page identification information in an inspection image read from a printed material, a printing quality of the inspection image by using the one normal image; and determine, in a case where the normal page identification information in the one normal image does not match the inspection page identification information in the inspection image, and there is another unused normal image having the normal page identification information that matches the inspection page identification information, the printing quality of the inspection image, based on the other normal image.

According to a second aspect of the present invention, in the information processing system according to the first aspect, the processor may be configured to: register the one normal image as a missing page.

According to a third aspect of the present invention, in the information processing system according to the first or second aspect, the processor may be configured to: in a case where the normal page identification information in the one normal image does not match the inspection page identification information in the inspection image, and there is another used normal image having the normal page identification information that matches the inspection page identification information, select the one normal image as a normal image of a subsequent printed material that is printed next to the printed material.

According to a fourth aspect of the present invention, in the information processing system according to the third aspect, the processor may be configured to: register the printed material as a doubling page.

According to a fifth aspect of the present invention, in the information processing system according to any one of the first to fourth aspects, the processor may be configured to: in a case where the normal page identification information in the one normal image does not match the inspection page identification information in the inspection image, and there is no other normal image having the normal page identification information that matches the inspection page identification information, select the one normal image as a normal image of a subsequent printed material that is printed next to the printed material.

According to a sixth aspect of the present invention, in the information processing system according to the fifth aspect, the processor may be configured to: register the printed material as an error page.

An information processing system according to a seventh aspect of the present invention is the information processing system according to any one of the first to sixth aspects, in which the processor may be configured to: set a partial image in the one normal image as the normal page identification information; and set a partial image in the inspection image read from the printed material as the inspection page identification information.

An information processing system according to an eighth aspect of the present invention is the information processing system according to the seventh aspect, in which the processor may be configured to: set an image at the same position as the normal page identification information among inspection images read from the printed material, as the inspection page identification information.

According to a ninth aspect of the present invention, there is provided an information processing program causing a computer to execute a process including: determining, in a case where normal page identification information in one normal image selected in sequence from a plurality of normal images matches inspection page identification information in an inspection image read from a printed material, a printing quality of the inspection image by using the one normal image; and determining, in a case where the normal page identification information in the one normal image does not match the inspection page identification information in the inspection image, and there is another unused normal image having the normal page identification information that matches the inspection page identification information, the printing quality of the inspection image, based on the other normal image.

According to a tenth aspect of the present invention, there is provided an information processing method including: determining, in a case where normal page identification information in one normal image selected in sequence from a plurality of normal images matches inspection page identification information in an inspection image read from a printed material, a printing quality of the inspection image by using the one normal image; and determining, in a case where the normal page identification information in the one normal image does not match the inspection page identification information in the inspection image, and there is another unused normal image having the normal page identification information that matches the inspection page identification information, the printing quality of the inspection image, based on the other normal image.

According to the first aspect of the present invention, even in a case where the printed material is missing, the printing quality of the next printed material can be inspected.

According to the second aspect of the present invention, in a case where the printed material is missing, the user can be notified of the missing page.

According to the third aspect of the present invention, even in a case where the printed material is doubled, the printing quality of the next printed material can be inspected.

According to the fourth aspect of the present invention, in a case where the printed material is doubled, the user can be notified of the doubling page.

According to the fifth aspect of the present invention, even in a case where there is an unnecessary printed material, the printing quality of the next printed material can be inspected.

According to a sixth aspect of the present invention, in a case where there is an unnecessary printed material, the user can be notified of the unnecessary page.

According to a seventh aspect of the present invention, it is possible to easily determine whether or not the normal page identification information and the inspection page identification information match each other, as compared with a case where entire one normal image is used as the normal page identification information and all the inspection images are used as the inspection page identification information.

According to a eighth aspect of the present invention, it is possible to easily determine whether or not the normal page identification information and the inspection page identification information match each other, as compared with a case where an image at a position different from the normal page identification information among the inspection images read from the printed material is set as the inspection page identification information.

According to the ninth aspect of the present invention, even in a case where the printed material is missing, the printing quality of the next printed material can be inspected.

According to the tenth aspect of the present invention, even in a case where the printed material is missing, the printing quality of the next printed material can be inspected.

### BRIEF DESCRIPTION OF THE DRAWINGS

Exemplary embodiment(s) of the present invention will be described in detail based on the following figures, wherein:
Fig. 1 is a diagram showing a schematic configuration of an image forming system according to an exemplary embodiment;
Fig. 2 is a diagram illustrating an operation of an image forming system according to a comparative example;
Fig. 3 is a diagram illustrating an operation of the image forming system according to the comparative example;
Fig. 4 is a block diagram showing a hardware configuration of the image forming system shown in Fig. 1;
Fig. 5 is a functional block diagram of the image forming system shown in Fig. 1;
Fig. 6 is a diagram illustrating normal page identification information and inspection page identification information of the image forming system shown in Fig. 1;
Fig. 7 is a diagram showing an example of a normal information management table of the image forming system shown in Fig. 1;
Fig. 8 is a diagram showing an example of an abnormal page information management table of the image forming system shown in Fig. 1;
Fig. 9 is a diagram illustrating an operation of the image forming system shown in Fig. 1;
Fig. 10 is a diagram illustrating an operation of the image forming system shown in Fig. 1; and
Fig. 11 is a flowchart showing a flow of an inspection process of the image forming system shown in Fig. 1.

### DETAILED DESCRIPTION OF THE INVENTION

Hereinafter, an exemplary embodiment will be described with reference to the drawings.

### (Overview of Image Forming System)

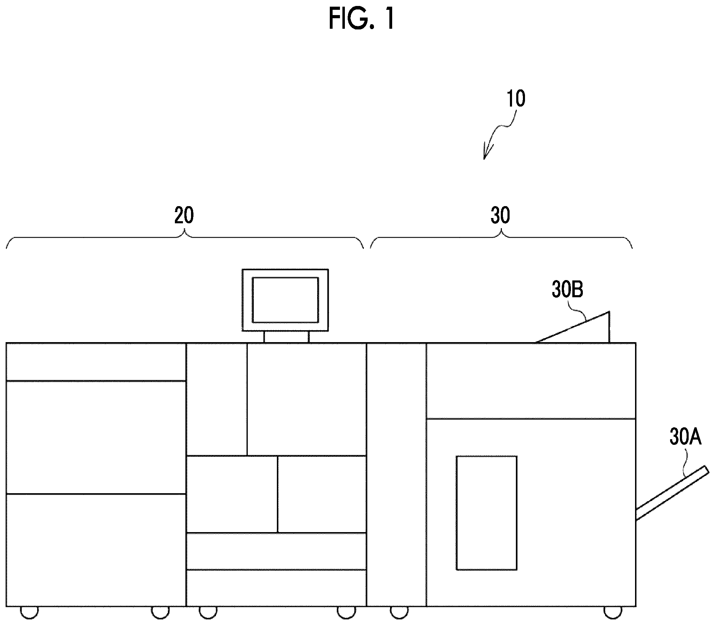

Fig. 1 illustrates an image forming system 10 according to an exemplary embodiment. The image forming system 10 includes a printing device 20 and an inspection device 30. The image forming system 10 is an example of an information processing system and an information processing apparatus.

### (Printing Device)

The printing device 20 includes a plurality of accommodation trays (paper feeding trays) for accommodating paper. The printing device 20 has a printing function of printing an image on the paper supplied from the accommodation trays. In addition, the printing device 20 supplies paper on which an image is printed (hereinafter, referred to as a "printed material") to the inspection device 30. The paper is an example of a recording medium.

### (Inspection Device)

The inspection device 30 sequentially receives the printed material on which the image is printed from the printing device 20, and has an inspection function of inspecting the printing quality of the received printed material. The inspection device 30 determines whether or not there is an abnormality such as corner folding, contamination of printing, or misalignment in the printed material received from the printing device 20.

Specifically, the inspection device 30 includes a discharge tray 30A that discharges the printed material and a purge tray 30B. In addition, the inspection device 30 optically reads the image of the printed material received from the printing device 20. Then, the inspection device 30 collates the inspection image based on the image read from the printed material with the normal image based on the image data printed on the paper to determine whether or not there is an abnormality in the printed material.

As a result, in a case where it is determined that there is an abnormality in the printed material, the inspection device 30 sets the inspection result to fail and discharges the printed material to the purge tray 30B. On the other hand, in a case where it is determined that there is no abnormality in the printed material, the inspection device 30 discharges the printed material into the discharge tray 30A by setting the inspection result as pass.

The discharge tray 30A is an example of a pass discharge unit. In addition, the purge tray 30B is an example of a fail discharge unit.

### (Continuous Printing)

The image forming system 10 has a continuous printing function. In this continuous printing, for example, a plurality of continuous printed materials are continuously printed while the printing quality is inspected. Specifically, in the continuous printing, the printing device 20 prints the image on each of the plurality of sheets of paper supplied in sequence from the accommodation tray, and the inspection device 30 inspects the printing quality of the printed material on which the image is printed in the printing order. In the inspection device 30, the printed material for which the inspection result is passed is discharged into the discharge tray 30A. On the other hand, the printed material for which the inspection result is determined to fail is discharged into the purge tray 30B.

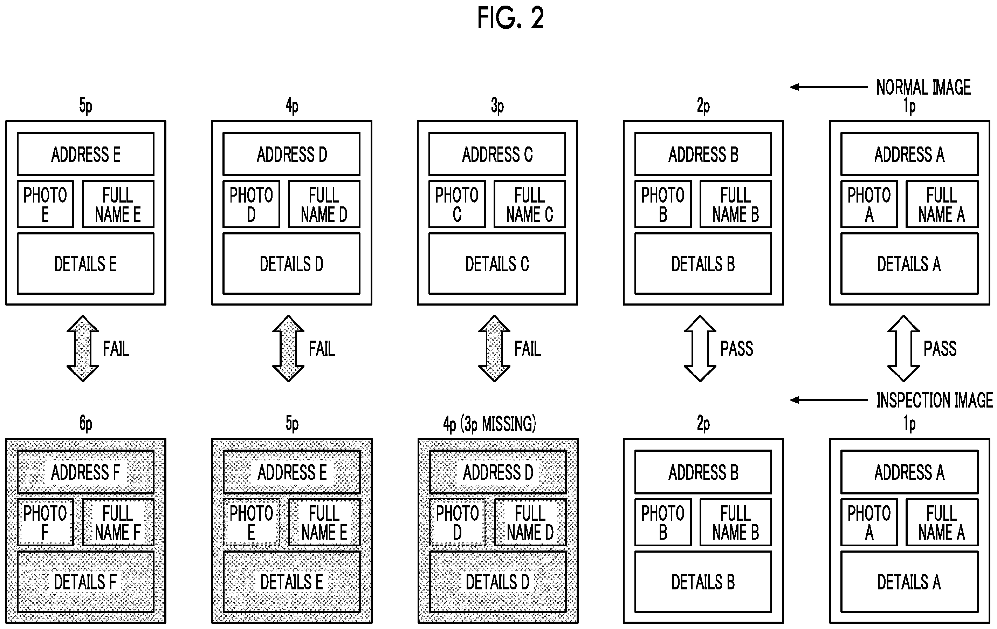

Here, Fig. 2 shows, as an example, a comparison relationship between a normal image of a printed material to be compared with the inspection image in the inspection device 30 during continuous printing. In the inspection device 30, generally, the normal image received from the printing device 20 and the inspection image based on the image read from the printed material are compared in the printing order.

In the inspection of such a plurality of continuous printed materials, in a case where the printed material has an abnormal page such as missing or doubling, a deviation occurs in the comparison relationship between the normal image and the inspection image.

Specifically, in Fig. 2, as an example, among the plurality of printed materials, the printed material of 3p is not printed, and the inspection image of 3p is missing. In this case, the inspection image of 4p is compared with the normal image of 3p. Therefore, the inspection image of 4p is determined to fail regardless of whether or not an abnormality is present. In addition, the missing of the inspection image of 3p causes a deviation in the comparison relationship between the inspection image of the printed material to be printed thereafter and the normal image. Therefore, even for the inspection images (5p, 6p, ...) of the printed material printed after missing of the inspection image, the printed materials are determined to fail regardless of whether or not an abnormality is present.

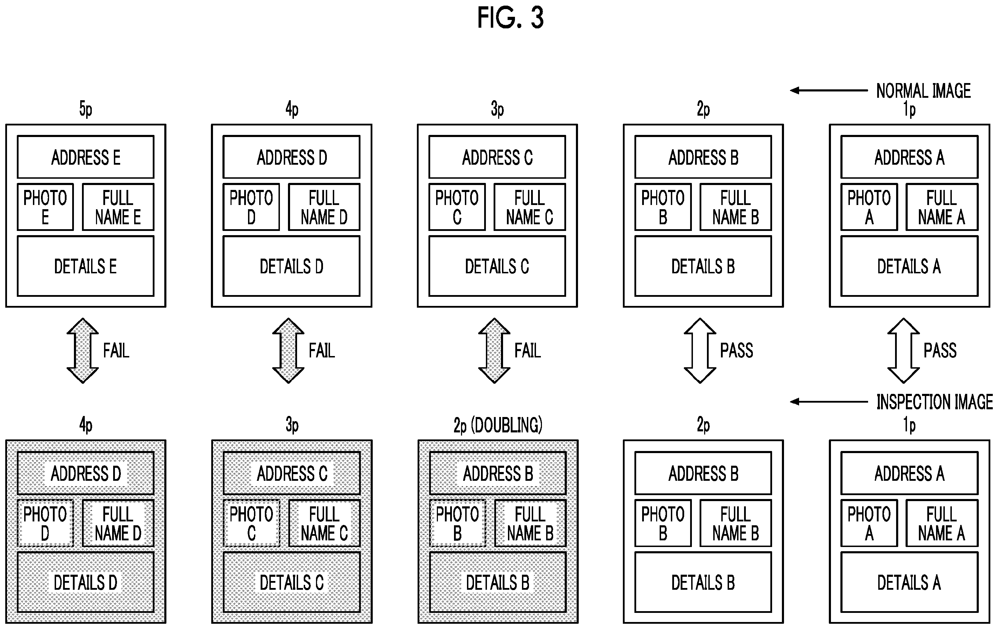

In addition, in Fig. 3, as an example, among the plurality of printed materials, the printed material of 2p is double-printed. In this case, the inspection images of 2p doubling each other are compared with the normal image of 3p. Therefore, the inspection images of 2p doubling each other are determined to be fail, regardless of whether or not an abnormality is present. In addition, since the inspection images of 2p doubling each other, a deviation occurs in the comparison relationship between the inspection image of the printed material printed thereafter and the normal image. Therefore, inspection images (3p, 4p, ...) of the printed material to be printed after the doubling of the inspection image are also determined to fail, regardless of whether or not an abnormality is present.

In the inspection of the plurality of continuous printed materials in this way, in a case where an abnormal page such as missing or doubling occurs in the printed materials, the amount of printed materials to be discarded may increase.

Therefore, in the image forming system 10 according to the present exemplary embodiment, in the inspection performed by the inspection device 30, the normal page identification information is set in the normal image, and the inspection page identification information is set in the inspection image. In the image forming system 10, a comparison relationship between the normal image and the inspection image is controlled in accordance with the collation result of the normal page identification information and the inspection page identification information. Hereinafter, the image forming system 10 according to the present exemplary embodiment will be described in detail.

### (Hardware Configuration of Image Forming System)

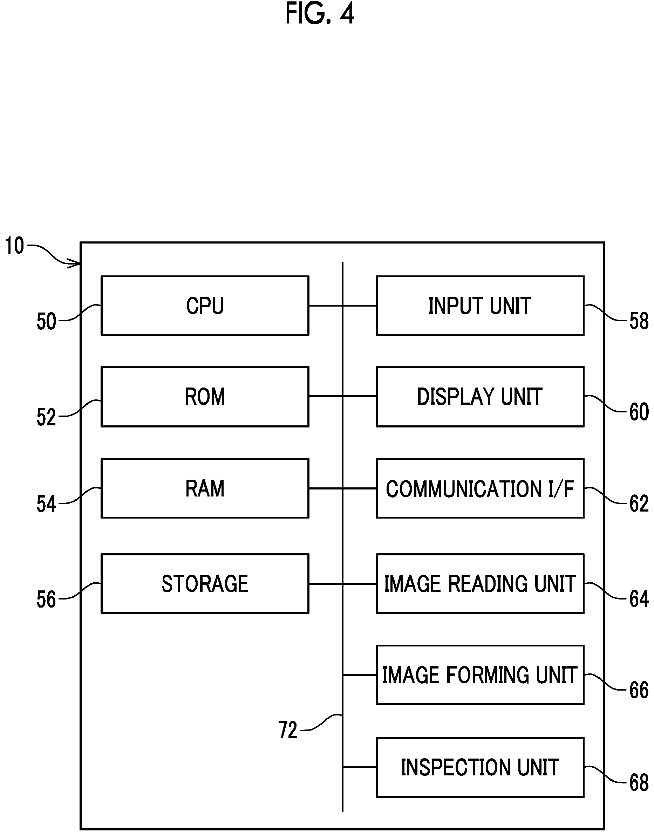

First, a hardware configuration of the image forming system 10 will be described. It should be noted that, in the following, for convenience of description, a hardware configuration of the image forming system 10 will be described, but the printing device 20 and the inspection device 30 may separately include the hardware configuration as shown in Fig. 4.

As shown in Fig. 4, the image forming system 10 has components including a central processing unit (CPU) 50, a read only memory (ROM) 52, a random access memory (RAM) 54, a storage 56, an input unit 58, a display unit 60, a communication interface (I/F) 62, an image reading unit 64, an image forming unit 66, and an inspection unit 68. The configurations are connected to each other via a bus 72 in a communicable manner.

The CPU 50 is a central processing unit and executes various programs or controls each unit. That is, the CPU 50 reads out a program from the ROM 52 or the storage 56 and executes the program using the RAM 54 as a work area. The CPU 50 controls each of the above-described configurations and performs various types of arithmetic processing according to the program recorded on the ROM 52 or the storage 56. In addition, the CPU 50 is an example of a processor.

The ROM 52 stores various information processing programs and various types of data. The RAM 54 temporarily stores the program or the data as the work area of the CPU 50.

The storage 56 is configured with a hard disk drive (HDD) or a solid state drive (SSD), and stores various programs including an operating system and various types of data. In addition, the storage 56 stores an inspection processing program.

The input unit 58 includes an operation button or the like and is used to perform various inputs. The display unit 60 is, for example, a liquid crystal display and displays various types of information. The display unit 60 may be a touch panel type and may function as the input unit.

The communication I/F 62 is an interface for communication with other apparatuses. For example, a standard, such as Ethernet (Registered Trademark), FDDI, or Wi-Fi (Registered Trademark), is used.

The image reading unit 64 includes a scanner or the like and optically reads image data from a document or the like. The image forming unit 66 prints the image data read by the image reading unit 64 or the image data received from an operation terminal (not shown) on a recording medium such as paper.

The inspection unit 68 includes a scanner or the like, and optically reads image data from the paper (printed material) on which the image is printed by the image forming unit 66.

### (Function of Image Forming System)

Next, functions of the image forming system 10 will be described.

In a case where the information processing program described above is executed, the image forming system 10 implements various functions of the printing device 20 and the inspection device 30 using the above hardware resources.

### (Printing Device)

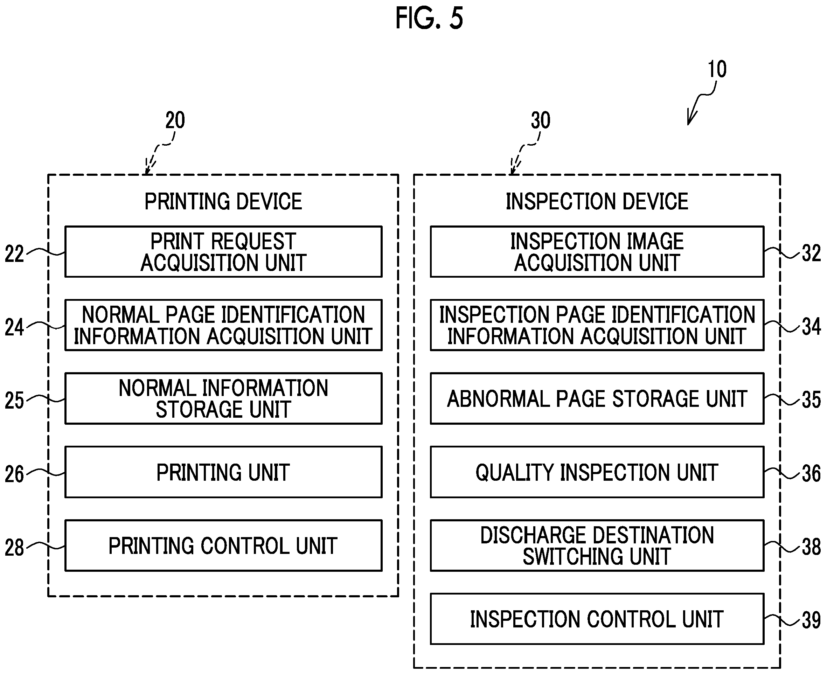

Specifically, as shown in Fig. 5, the printing device 20 functionally includes a print request acquisition unit 22, a normal page identification information acquisition unit 24, a normal information storage unit 25, a printing unit 26, and a printing control unit 28.

### (Print Request Acquisition Unit)

The print request acquisition unit 22 acquires, for example, information (print data) of the print image input to the image forming system 10 or a print request (print job) such as a paper size and the number of printed sheets.

### (Normal page Identification Information Acquisition Unit)

The normal page identification information acquisition unit 24 acquires the normal page identification information input to the image forming system 10. The normal page identification information is set by the user, for example, on a setting screen or the like displayed on the display unit 60 of the image forming system 10.

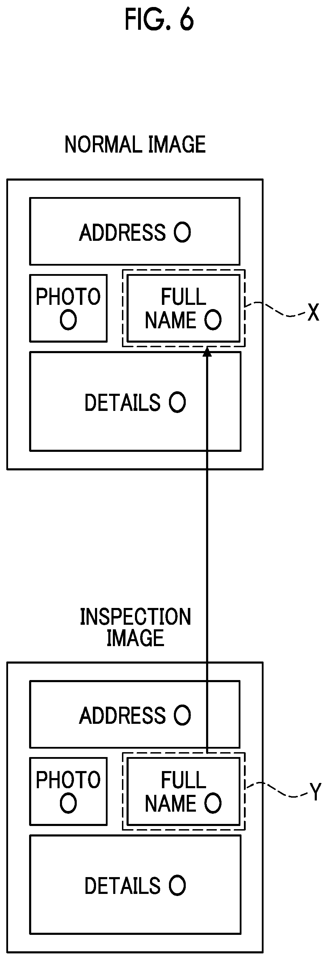

Fig. 6 shows an example of the normal page identification information X as an example. In Fig. 6, a partial image of the normal image is set as the normal page identification information X. In this case, the normal page identification information acquisition unit 24 reads a partial image set as the normal page identification information X from the normal image. In this case, in a case where the normal page identification information X includes a text, the normal page identification information acquisition unit 24 may convert the text into a text code and read the text code. That is, in the example shown in Fig. 6, the normal page identification information acquisition unit 24 may read some regions of the normal image in which the full name is displayed as the image, or may convert the full name displayed in the region into a text code and read the text code.

### (Normal Information Storage Unit)

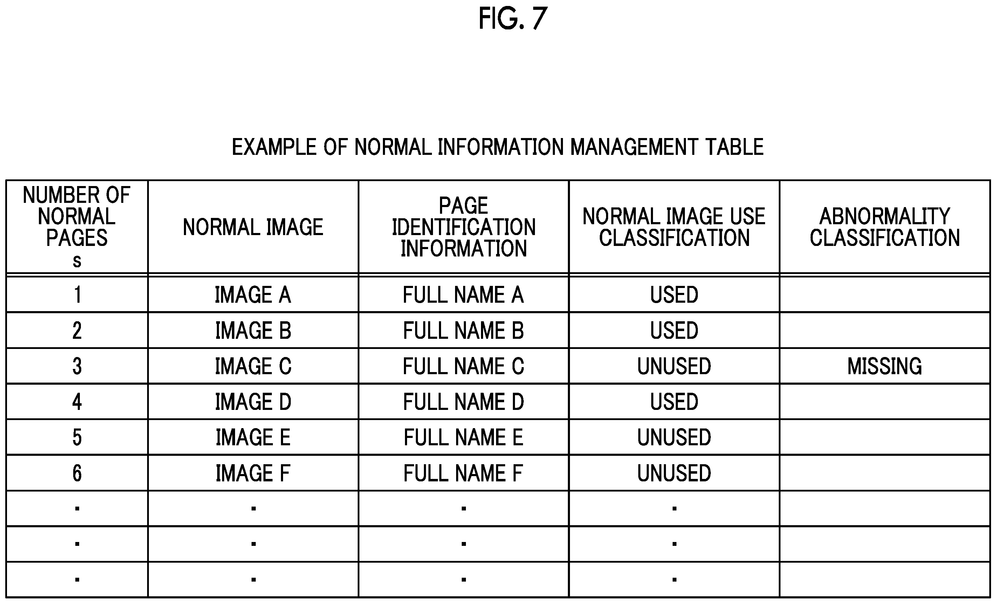

The normal information storage unit 25 stores a normal information management table in which normal information of the printed material is registered. Fig. 7 shows an example of a normal information management table. The normal information management table has, as items, the number of normal pages s, normal images, normal page identification information, a normal image use classification, and an abnormality classification.

The number of normal pages s is information indicating the number of pages of the plurality of normal images, and is, for example, a serial number. In addition, the normal image is a rasterized image or the like generated based on the print data. The normal page identification information is identification information for identifying a page of the normal image.

The normal image use classification is information indicating whether or not the normal image is used, in the inspection of the printing quality of the printed material by the inspection device 30. Examples of the normal image use classification include "unused" and "used". It should be noted that the initial value of the normal image use classification is set to "unused".

The abnormality classification is information indicating an abnormal page of the printed material. Examples of the abnormality classification include "missing", "doubling", and "error".

### (Printing Control Unit)

The printing control unit 28 controls the operation of the entire printing device 20. In addition, the printing control unit 28 executes continuous printing for printing an image on each of a plurality of sheets of paper accommodated in the accommodation tray and sequentially supplying the plurality of printed materials to the inspection device 30.

Specifically, the printing control unit 28 controls a paper feeding device (not shown) based on the print request acquired by the print request acquisition unit 22 to sequentially supply a plurality of sheets of paper from the accommodation tray to the printing unit 26. In addition, the printing control unit 28 transmits the print data to be printed on the plurality of sheets of paper to the printing unit 26. Then, the printing control unit 28 causes the printing unit 26 to print the image based on the print data on each of the plurality of sheets of paper supplied from the accommodation tray, and sequentially supplies the plurality of printed materials from the printing unit 26 to the inspection device 30.

In addition, the printing control unit 28 generates a plurality of normal images, such as rasterized images, based on the print data of the plurality of printed materials, and registers the plurality of generated normal images in association with the number of normal pages s in the normal information management table (see Fig. 7).

Further, the printing control unit 28 registers the normal page identification information X of each normal image in the normal information management table in association with each normal image.

### (Inspection Device)

As shown in Fig. 5, the inspection device 30 includes, functionally, an inspection image acquisition unit 32, an inspection page identification information acquisition unit 34, an abnormal page storage unit 35, a quality inspection unit 36, a discharge destination switching unit 38, and an inspection control unit 39.

### (Inspection Image Acquisition Unit)

The inspection image acquisition unit 32 optically reads an image from a printed material printed by the printing unit 26 and generates an inspection image such as a rasterized image based on the read image.

### (Inspection Page Identification Information Acquisition Unit)

The inspection page identification information acquisition unit 34 reads the inspection page identification information from the inspection image, based on the normal page identification information X of the normal image. Specifically, as shown in Fig. 6, the inspection page identification information acquisition unit 34 reads an image at the same position as the normal page identification information X of the normal image as the inspection page identification information Y from the inspection image.

In this case, in a case where the normal page identification information X is an image, the inspection page identification information acquisition unit 34 reads the inspection page identification information Y as an image. On the other hand, in a case where the normal page identification information X is a text code, the inspection page identification information acquisition unit 34 converts the text included in the inspection page identification information Y into the text code and reads the text code.

### (Abnormal Page Storage Unit)

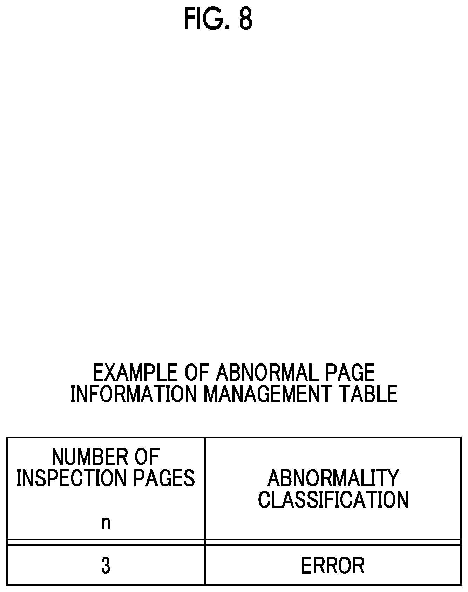

The abnormal page storage unit 35 stores an abnormal page information management table in which abnormal page information of the printed material is registered. Fig. 8 shows an example of an abnormal page information management table. The abnormal page information management table has the number of inspection pages n and the abnormality classification as items.

The number of inspection pages n is information indicating the number of pages of the plurality of inspection images, and is, for example, a serial number. The abnormality classification is information indicating an abnormal page of the printed material. Examples of this abnormality classification include "doubling" and "error".

### (Quality Inspection Unit)

First, the quality inspection unit 36 collates the inspection page identification information Y of the inspection image with the normal page identification information X of the normal image to determine whether or not there is an abnormal page such as missing or doubling in the printed material. Specifically, in a case where the inspection page identification information Y and the normal page identification information X match, the quality inspection unit 36 determines that there is no abnormal page such as missing or doubling in the printed material.

In this case, the quality inspection unit 36 compares the inspection image with the normal image to determine whether the printing quality of the printed material is pass or fail. Specifically, the quality inspection unit 36 compares the inspection image with a reference image to determine whether or not there is an abnormality such as a corner folding, printing contamination, or misalignment. Moreover, in a case where it is determined that there is no abnormality in the inspection image, the quality inspection unit 36 determines the inspection image as pass. In a case where it is determined that there is an abnormality in the inspection image, the quality inspection unit 36 determines the inspection image as fail.

In addition, in a case where the inspection image and the normal image are compared with each other, the quality inspection unit 36 changes the "use classification" of the normal image in the normal information management table (see Fig. 7) to "used".

On the other hand, in a case where the inspection page identification information Y and the normal page identification information X do not match, the quality inspection unit 36 determines that there is an abnormal page such as missing and doubling in the printed material.

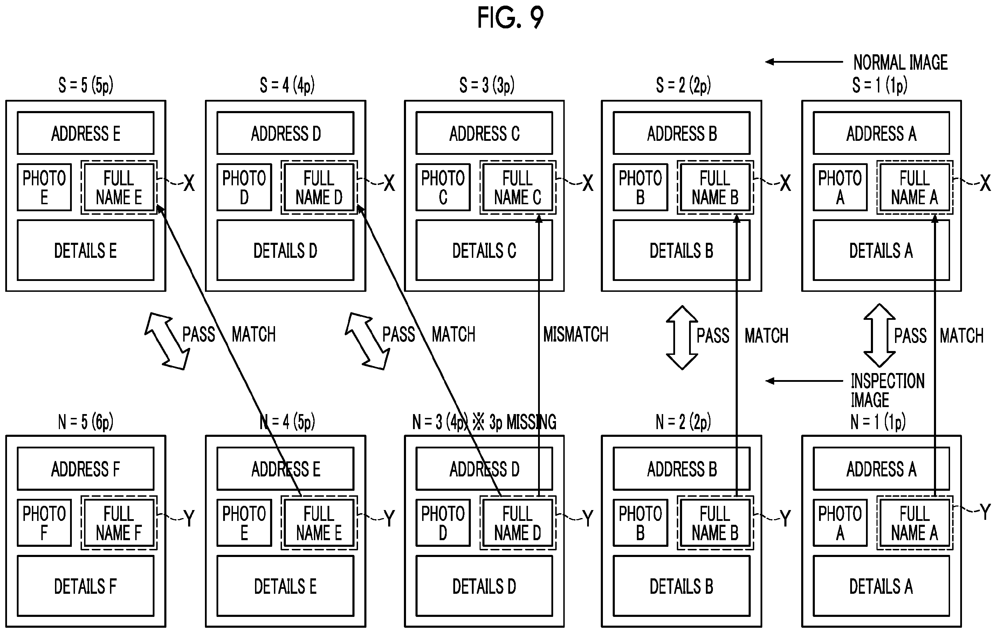

Specifically, Fig. 9 shows an example of page missing of the printed material. In Fig. 9, in the number of inspection pages n = 3, the inspection image (3p) corresponding to the normal image (3p) of the number of normal pages s = 3 is missing.

In this case, since the inspection page identification information Y in the inspection image (4p) of the number of inspection pages n = 3 and the normal page identification information X in the normal image (3p) of the number of normal pages s = 3 are compared with each other, the inspection page identification information Y and the normal page identification information X do not match each other. Therefore, the quality inspection unit 36 does not compare the inspection image of the number of inspection pages n = 3 with the normal image of the number of normal pages s = 3. In addition, the quality inspection unit 36 does not change the normal image use classification of the number of normal pages s = 3 to "used" and leaves the use classification as "unused", in the normal information management table.

Next, the quality inspection unit 36 searches for another normal page identification information X that matches the inspection page identification information Y of the number of inspection pages n = 3 in the normal information management table. In other words, the quality inspection unit 36 searches for another normal image having the normal page identification information X that matches the inspection page identification information Y of the number of inspection pages n = 3 in the normal information management table.

Then, in a case where the other normal page identification information X matching the inspection page identification information Y of the number of inspection pages n = 3 is found, the quality inspection unit 36 inspects the inspection image of the number of inspection pages n = 3 by using the normal image corresponding to the other normal page identification information X.

In the example shown in Fig. 9, the inspection page identification information Y of the number of inspection pages n = 3 and the normal page identification information X of the number of normal pages s = 4 match each other. Therefore, the quality inspection unit 36 inspects the inspection image (4p) of the number of inspection pages n = 3 by using the normal image (4p) of the number of normal pages s = 4, and changes the normal image use classification of the normal page 4 in the normal information management table to "used". In addition, the quality inspection unit 36 registers "missing" in the abnormality classification of the normal image of the number of normal pages s = 3 in the normal information management table.

On the other hand, in a case where the other normal page identification information X matching the inspection page identification information Y of the number of inspection pages n = 3 is not found, the quality inspection unit 36 registers the inspection image of the number of inspection pages n = 3 as the error page. Specifically, the quality inspection unit 36 registers the number of inspection pages n (= 3) and the abnormality classification ("error") in association with each other in the abnormal page information management table (see Fig. 8).

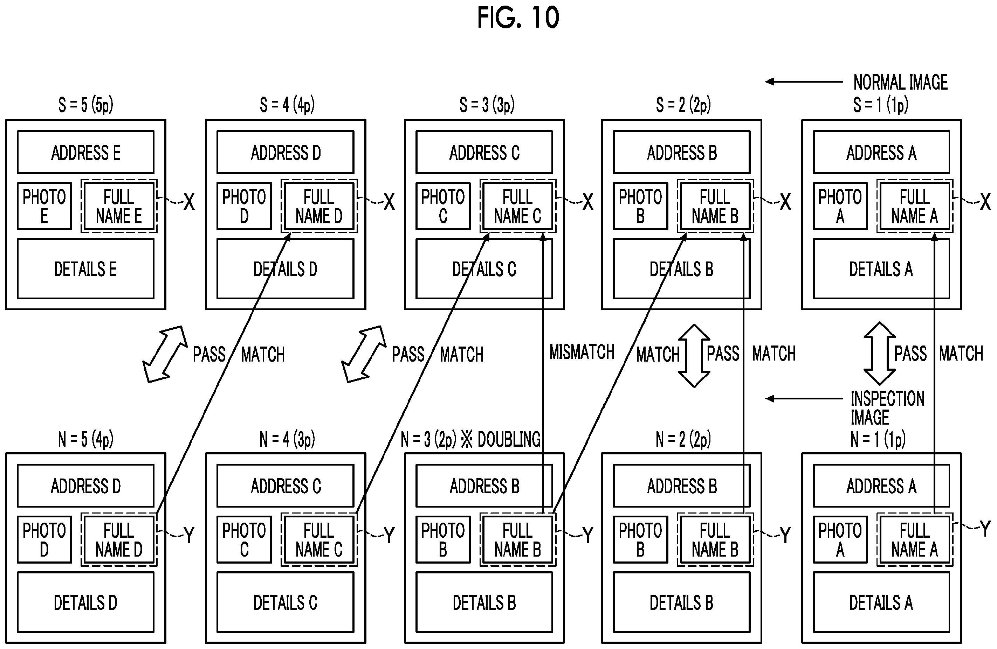

Next, Fig. 10 shows an example of page doubling. In Fig. 10, the inspection image (2p) of the number of inspection pages n = 3 doubles with the normal image (2p) of the number of normal pages s = 2.

In this case, since the inspection page identification information Y in the inspection image (p2) of the number of inspection pages n = 3 and the normal page identification information X in the normal image (p3) of the number of normal pages s = 3 are compared with each other, the inspection page identification information Y and the normal page identification information X do not match each other. Therefore, the quality inspection unit 36 does not compare the inspection image (2p) of the number of inspection pages n = 3 with the normal image (3p) of the number of normal pages s = 3. In addition, the quality inspection unit 36 does not change the normal image use classification of the number of normal pages s = 3 to "used" and leaves the use classification as "unused", in the normal information management table.

Next, the quality inspection unit 36 searches for another normal page identification information X that matches the inspection page identification information Y of the number of inspection pages n = 3 in the normal information management table. In other words, the quality inspection unit 36 searches for another normal image having the normal page identification information X that matches the inspection page identification information Y of the number of inspection pages n = 3 in the normal information management table.

In a case where the other normal page identification information X matching the inspection page identification information Y of the inspection page number n = 3 is found, the quality inspection unit 36 registers "doubling" in the abnormality classification of the normal image corresponding to the other normal page identification information X in the normal information management table.

In the example shown in Fig. 10, the inspection page identification information Y of the number of inspection pages n = 3 and the normal page identification information X of the number of normal pages s = 2 match each other. Therefore, the quality inspection unit 36 registers "doubling" in the abnormality classification of the normal image (2p) of the number of normal pages s = 2 in the normal information management table.

In addition, the quality inspection unit 36 registers the inspection images of the number of inspection pages n = 3 as the doubling pages. Specifically, the quality inspection unit 36 registers the number of inspection pages n (= 3) and the abnormality classification ("doubling") in the abnormal page information management table (see Fig. 8) in association with each other.

On the other hand, in a case where the other normal page identification information X matching the inspection page identification information Y of the number of inspection pages n = 3 is not found, the quality inspection unit 36 registers the inspection image of the number of inspection pages n = 3 as the error page. Specifically, the quality inspection unit 36 registers the number of inspection pages n (= 3) and the abnormality classification ("error") in association with each other in the abnormal page information management table (see Fig. 8).

### (Discharge Destination Switching Unit)

The discharge destination switching unit 38 switches the discharge destination of the printed material inspected by the quality inspection unit 36 between the discharge tray 30A and the purge tray 30B.

### (Inspection Control Unit)

The inspection control unit 39 controls the operation of the entire inspection device 30. Specifically, the inspection control unit 39 causes the quality inspection unit 36 to inspect the printing quality of the printed material. In a case where the printing quality of the printed material is passed by the quality inspection unit 36, the inspection control unit 39 causes the discharge destination switching unit 38 to switch the discharge destination of the printed material to the discharge tray 30A.

On the other hand, in a case where the inspection result of the printed material by the quality inspection unit 36 is fail, the inspection control unit 39 switches the discharge destination of the printed material to the purge tray 30B by the discharge destination switching unit 38.

In addition, in a case where there is a printed material determined to be the abnormal page by the quality inspection unit 36, the inspection control unit 39 displays a message indicating that there is the abnormal page on the display unit 60 of the image forming system 10.

### (Printing Process of Image Forming System)

Next, an inspection process by the image forming system 10 will be described.

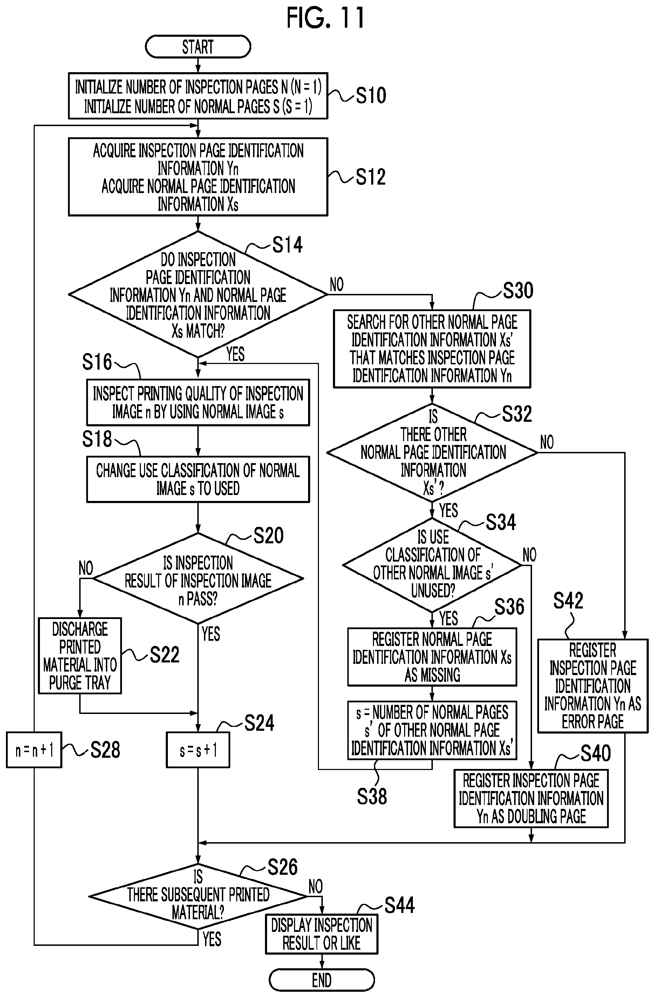

In the image forming system 10, in a case where continuous printing of a plurality of printed materials is executed and the printed material printed by the printing device 20 is supplied to the inspection device 30, the inspection process shown in Fig. 11 is executed in the image forming system 10. The inspection process is an example of an inspection processing method.

First, in step S10, the CPU 50 initializes the number of inspection pages n and the number of normal pages s (N = 1, S = 1), respectively. The number of inspection pages n corresponds to the number of pages of the plurality of printed materials to be inspected. In addition, the number of normal pages s corresponds to the number of pages of the plurality of normal images.

Next, in step S12, the CPU 50 acquires the inspection page identification information Y of the number of inspection pages n. Specifically, the CPU 50 acquires the inspection page identification information Y (hereinafter, referred to as "inspection page identification information Yn") from the inspection image of the printed material of the number of inspection pages n read by the inspection device 30.

In addition, in step S12, the CPU 50 acquires the normal page identification information X of the number of normal pages s. Specifically, the CPU 50 acquires normal page identification information X (hereinafter, referred to as "normal page identification information Xs") corresponding to the number of normal pages s from the normal information management table.

Next, in step S14, the CPU 50 determines whether or not the inspection page identification information Yn and the normal page identification information Xs match. In a case where the CPU 50 determines that the inspection page identification information Yn and the normal page identification information Xs match, the CPU 50 transitions to step S16.

In step S16, the CPU 50 inspects the printing quality of the inspection image (hereinafter, referred to as an "inspection image n") corresponding to the inspection page identification information Yn by using the normal image (hereinafter, referred to as a "normal image s") corresponding to the normal page identification information Xs. The normal image s is an example of one normal image.

Next, in step S18, the CPU 50 changes the use classification of the normal image s to "used" in the normal information management table (see Fig. 7).

Next, in step S20, the CPU 50 determines whether or not the inspection result of the inspection image n is pass. Then, in a case where the CPU 50 determines that the inspection result of the inspection image n is fail, the CPU 50 transitions to step S22.

Next, in step S22, the CPU 50 determines the inspection result of the inspection image n as fail and stores the inspection image n in the predetermined storage region, and discharges the printed material corresponding to the inspection image n into the purge tray 30B to proceed to step S24.

On the other hand, in step S20, in a case where the CPU 50 determines that the inspection result of the inspection image n is pass, the CPU 50 transitions to step S24.

Next, in step S24, the CPU 50 adds 1 to the number of normal pages s.

Next, in step S26, the CPU 50 determines whether or not there is a printed material (hereinafter, referred to as a "subsequent printed material") following the number of inspection pages n. Then, in a case where the CPU 50 determines that there is a subsequent printed material, the CPU 50 transitions to step S28.

Next, in step S28, the CPU 50 adds 1 to the number of inspection pages n and returns to step S12.

Here, in step S14 described above, in a case where the CPU 50 determines that the inspection page identification information Yn and the normal page identification information Xs do not match, the CPU 50 transitions to step S30.

Next, in step S30, the CPU 50 searches for another normal page identification information (hereinafter, referred to as "normal page identification information Xs'") that matches the inspection page identification information Yn. Specifically, the CPU 50 searches for the normal page identification information Xs' in the normal image information management table, with the inspection page identification information Yn as a search key.

Next, in step S32, the CPU 50 determines whether or not there is the other normal page identification information Xs'. In a case where the CPU 50 determines that there is the other normal page identification information Xs', the CPU 50 transitions to step S34.

Next, in step S34, the CPU 50 determines whether or not the use classification of the normal image corresponding to the other normal page identification information Xs' (hereinafter, referred to as a "normal image s'") is "unused". In a case where the CPU 50 determines that the use classification of the normal image s' is "unused", the CPU 50 transitions to step S36. The normal image s' is an example of other normal images.

In step S36, the CPU 50 registers the abnormality classification corresponding to the normal page identification information Xs as "missing" ("missing page") in the normal information management table.

Next, in step S38, the CPU 50 changes the number of normal pages s to the number of normal pages s' of the other normal page identification information Xs', and transitions to step S16. Thus, in next step S16, the CPU 50 inspects the inspection image n by using the normal image s' corresponding to the other normal page identification information Xs'.

On the other hand, in step S34, in a case where the CPU 50 determines that the use classification of the normal image s' is not "unused", that is, determines that the use classification of the normal image s' is "used", the CPU 50 transitions to step S40.

Next, in step S40, the CPU 50 registers the number of the inspection pages n and the abnormality classification ("doubling") in association with each other in the abnormal page information management table (see Fig. 8). In addition, the CPU 50 registers "doubling" in the abnormality classification of the other normal image s' in the normal information management table, and transitions to step S26. In this case, the CPU 50 does not transition to step S24, that is, does not add 1 to the number of normal pages s, and selects the same normal image s (one normal image) as the normal image of the subsequent printed material to be printed next.

Next, in step S32 described above, in a case where the CPU 50 determines that there is no other normal page identification information Xs', the CPU 50 transitions to step S42.

Next, in step S42, the CPU 50 registers the number of inspection pages n and the abnormality classification ("error") in the abnormal page information management table in association with each other and transitions to step S26. In this case, the CPU 50 does not transition to step S24, that is, does not add 1 to the number of normal pages s, and selects the same normal image s (one normal image) as the normal image of the subsequent printed material to be printed next.

Next, in step S26 described above, in a case where the CPU 50 determines that there is no subsequent printed material, the CPU 50 transitions to a step S44.

Next, in step S44, the CPU 50 reads out the missing, doubling, and error of the printed material from the abnormality classification of the normal information management table and the abnormality classification of the abnormal page information management table, and displays the missing, doubling, and error on the display unit 60 of the image forming system 10 to end the process.

### (Modification Example)

Next, modification examples of the above-described exemplary embodiment will be described.

In the above exemplary embodiment, the image showing the full name in the normal image is set as the normal page identification information X. However, the normal page identification information may be able to identify a plurality of normal images, and may be, for example, a page number, a numerical value, a symbol, or the like in the normal image.

In addition, the image forming system 10 may add a page number, a numerical value, a symbol, a barcode, or a quick response (QR) code (registered trademark) to the normal image, as the normal page identification information. In this case, the image forming system 10 adds a page number, a numerical value, a symbol, a barcode, or a QR code as the inspection page identification information to the print data transmitted to the printing device 20, and prints the print data on the printed material by the printing device 20.

In addition, in the above-described exemplary embodiment, the normal page identification information and the normal image are associated with each other and registered in the normal information management table. However, the image forming system 10 may generate the normal image based on the print data and read the normal page identification information X from the generated normal image in a case where the inspection image and the inspection page identification information Y are read from the printed material in the inspection device 30 without using the normal information management table.

In addition, in the above-described exemplary embodiment, after the inspection of the plurality of printed materials is completed, the information about the abnormal page is displayed on the display unit 60 of the image forming system 10. However, for example, in a case where the inspection device 30 detects the abnormal page, the information of the abnormal page may be displayed on the display unit 60 of the image forming system 10.

In addition, in the above exemplary embodiment, the image at the same position as the normal page identification information X in the inspection image is set as the inspection page identification information Y. However, the normal page identification information X and the inspection page identification information Y may be identification information that can be collated with each other, and for example, an image at a position different from the normal page identification information in the inspection image may be set as the inspection page identification information.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In the above exemplary embodiment, the mode in which each program is installed in the ROM or the storage has been described, but the present invention is not limited to this. Each program according to the above exemplary embodiment may be provided in the form of a recording on a computer readable storage medium. For example, each program according to the above exemplary embodiment may be provided in the form of a recording on an optical disc such as a compact disc (CD)-ROM and a digital versatile disc (DVD)-ROM or in the form of a recording on a semiconductor memory such as a universal serial bus (USB) memory and a memory card. Further, each program according to the above-described exemplary embodiment may be acquired from an external apparatus via a communication I/F.

In addition, in the exemplary embodiment described above, a case where the processing in the image forming system 10 is implemented by a software configuration by using a computer by executing a program is described, but the present disclosure is not limited thereto. For example, the processing in the image forming system 10 may be implemented by a hardware configuration or a combination of the hardware configuration and the software configuration.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

10: image forming system (information processing system, information processing apparatus)
50: CPU (processor)

## Claims

1. An information processing system comprising:
a processor **characterized in that** said processor is configured to:
determine, in a case where normal page identification information in one normal image selected in sequence from a plurality of normal images matches inspection page identification information in an inspection image read from a printed material, a printing quality of the inspection image by using the one normal image; and
determine, in a case where the normal page identification information in the one normal image does not match the inspection page identification information in the inspection image, and there is another unused normal image having the normal page identification information that matches the inspection page identification information, the printing quality of the inspection image, based on the other normal image.

2. The information processing system according to claim 1, wherein the processor is configured to:
register the one normal image as a missing page.

3. The information processing system according to claim 1 or 2, wherein the processor is configured to:
in a case where the normal page identification information in the one normal image does not match the inspection page identification information in the inspection image, and there is another used normal image having the normal page identification information that matches the inspection page identification information, select the one normal image as a normal image of a subsequent printed material that is printed next to the printed material.

4. The information processing system according to claim 3, wherein the processor is configured to:
register the printed material as a doubling page.

5. The information processing system according to any one of claims 1 to 4, wherein the processor is configured to:
in a case where the normal page identification information in the one normal image does not match the inspection page identification information in the inspection image, and there is no other normal image having the normal page identification information that matches the inspection page identification information, select the one normal image as a normal image of a subsequent printed material that is printed next to the printed material.

6. The information processing system according to claim 5, wherein the processor is configured to:
register the printed material as an error page.

7. The information processing system according to any one of claims 1 to 6, wherein the processor is configured to:
set a partial image in the one normal image as the normal page identification information; and
set a partial image in the inspection image read from the printed material as the inspection page identification information.

8. The information processing system according to claim 7, wherein the processor is configured to:
set an image at the same position as the normal page identification information among inspection images read from the printed material, as the inspection page identification information.

9. An information processing program causing a computer to execute a process comprising:
determining, in a case where normal page identification information in one normal image selected in sequence from a plurality of normal images matches inspection page identification information in an inspection image read from a printed material, a printing quality of the inspection image by using the one normal image; and
determining, in a case where the normal page identification information in the one normal image does not match the inspection page identification information in the inspection image, and there is another unused normal image having the normal page identification information that matches the inspection page identification information, the printing quality of the inspection image, based on the other normal image.

10. An information processing method comprising:
determining, in a case where normal page identification information in one normal image selected in sequence from a plurality of normal images matches inspection page identification information in an inspection image read from a printed material, a printing quality of the inspection image by using the one normal image; and
determining, in a case where the normal page identification information in the one normal image does not match the inspection page identification information in the inspection image, and there is another unused normal image having the normal page identification information that matches the inspection page identification information, the printing quality of the inspection image, based on the other normal image.

## Patentansprüche

1. Informationsverarbeitungssystem, umfassend:
einen Prozessor, der **dadurch gekennzeichnet ist, dass** der Prozessor so konfiguriert ist, dass er:
in einem Fall, in dem Normalseiten-Identifikationsinformationen in einem Normalbild, das aus mehreren Normalbildern sequentiell ausgewählt wird, mit Prüfseiten-Identifikationsinformationen in einem Prüfbild, das von einem gedruckten Material gelesen wird, übereinstimmen, eine Druckqualität des Prüfbildes durch Verwenden des einen Normalbildes bestimmt; und
in einem Fall, in dem die Normalseiten-Identifikationsinformationen in dem einen Normalbild nicht mit den Prüfseiten-Identifikationsinformationen in dem Prüfbild übereinstimmen und es ein anderes unbenutztes Normalbild gibt, das die Normalseiten-Identifikationsinformationen aufweist, die mit den Prüfseiten-Identifikationsinformationen übereinstimmen, die Druckqualität des Prüfbildes auf der Grundlage des anderen Normalbildes bestimmt.

2. Informationsverarbeitungssystem nach Anspruch 1, wobei der Prozessor so konfiguriert ist, dass er:
das eine Normalbild als eine fehlende Seite registriert.

3. Informationsverarbeitungssystem nach Anspruch 1 oder 2, wobei der Prozessor so konfiguriert ist, dass er:
in einem Fall, in dem die Normalseiten-Identifikationsinformationen in dem einen Normalbild nicht mit den Prüfseiten-Identifikationsinformationen in dem Prüfbild übereinstimmen und es ein anderes benutztes Normalbild gibt, das die Normalseiten-Identifikationsinformationen aufweist, die mit den Prüfseiten-Identifikationsinformationen übereinstimmen, das eine Normalbild als ein Normalbild eines nachfolgenden gedruckten Materials, das neben dem gedruckten Material gedruckt wird, auswählt.

4. Informationsverarbeitungssystem nach Anspruch 3, wobei der Prozessor so konfiguriert ist, dass er:
das gedruckte Material als eine Doppelseite registriert.

5. Informationsverarbeitungssystem nach einem der Ansprüche 1 bis 4, wobei der Prozessor so konfiguriert ist, dass er:
in einem Fall, in dem die Normalseiten-Identifikationsinformationen in dem einen Normalbild nicht mit den Prüfseiten-Identifikationsinformationen in dem Prüfbild übereinstimmen und es kein anderes Normalbild gibt, das die Normalseiten-Identifikationsinformationen aufweist, die mit den Prüfseiten-Identifikationsinformationen übereinstimmen, das eine Normalbild als ein Normalbild eines nachfolgenden gedruckten Materials, das neben dem gedruckten Material gedruckt wird, auswählt.

6. Informationsverarbeitungssystem nach Anspruch 5, wobei der Prozessor so konfiguriert ist, dass er:
das gedruckte Material als eine Fehlerseite registriert.

7. Informationsverarbeitungssystem nach einem der Ansprüche 1 bis 6, wobei der Prozessor so konfiguriert ist, dass er:
ein Teilbild in dem einen Normalbild als die Normalseiten-Identifikationsinformationen einstellt; und
ein Teilbild in dem Prüfbild, das aus dem gedruckten Material gelesen wird, als die Prüfseiten-Identifikationsinformationen einstellt.

8. Informationsverarbeitungssystem nach Anspruch 7, wobei der Prozessor so konfiguriert ist, dass er:
ein Bild an der gleichen Position wie die Normalseiten-Identifikationsinformationen unter Prüfbildern, die aus dem gedruckten Material gelesen werden, als die Prüfseiten-Identifikationsinformationen einstellt.

9. Informationsverarbeitungsprogramm, das einen Computer veranlasst, einen Prozess auszuführen, der umfasst:
Bestimmen, in einem Fall, in dem Normalseiten-Identifikationsinformationen in einem Normalbild, das aus mehreren Normalbildern sequentiell ausgewählt wird, mit Prüfseiten-Identifikationsinformationen in einem Prüfbild, das aus einem gedruckten Material gelesen wird, übereinstimmen, einer Druckqualität des Prüfbildes durch Verwenden des einen Normalbildes; und
Bestimmen, in einem Fall, in dem die Normalseiten-Identifikationsinformationen in dem einen Normalbild nicht mit den Prüfseiten-Identifikationsinformationen in dem Prüfbild übereinstimmen und es ein anderes unbenutztes Normalbild gibt, das die Normalseiten-Identifikationsinformationen aufweist, die mit den Prüfseiten-Identifikationsinformationen übereinstimmen, der Druckqualität des Prüfbildes auf der Grundlage des anderen Normalbildes.

10. Informationsverarbeitungsverfahren, umfassend:
Bestimmen, in einem Fall, in dem Normalseiten-Identifikationsinformationen in einem Normalbild, das aus mehreren Normalbildern sequentiell ausgewählt wird, mit Prüfseiten-Identifikationsinformationen in einem Prüfbild, das aus einem gedruckten Material gelesen wird, übereinstimmen, einer Druckqualität des Prüfbildes durch Verwenden des einen Normalbildes; und
Bestimmen, in einem Fall, in dem die Normalseiten-Identifikationsinformationen in dem einen Normalbild nicht mit den Prüfseiten-Identifikationsinformationen in dem Prüfbild übereinstimmen und es ein anderes unbenutztes Normalbild gibt, das die Normalseiten-Identifikationsinformationen aufweist, die mit den Prüfseiten-Identifikationsinformationen übereinstimmen, der Druckqualität des Prüfbildes auf der Grundlage des anderen Normalbildes.

## Revendications

1. Système de traitement d'informations comprenant :
un processeur, **caractérisé en ce que** ledit processeur est configuré pour :
déterminer, dans un cas où des informations d'identification de page normale dans une image normale sélectionnée séquentiellement parmi une pluralité d'images normales correspondent à des informations d'identification de page d'inspection dans une image d'inspection lue à partir d'un matériel imprimé, une qualité d'impression de l'image d'inspection en utilisant l'image normale ; et
déterminer, dans un cas où les informations d'identification de page normale dans l'image normale ne correspondent pas aux informations d'identification de page d'inspection dans l'image d'inspection, et il existe une autre image normale non utilisée ayant les informations d'identification de page normale qui correspondent aux informations d'identification de page d'inspection, la qualité d'impression de l'image d'inspection, sur la base de l'autre image normale.

2. Système de traitement d'informations selon la revendication 1, dans lequel le processeur est configuré pour :
enregistrer l'image normale comme une page manquante.

3. Système de traitement d'informations selon la revendication 1 ou la revendication 2, dans lequel le processeur est configuré pour :
dans un cas où les informations d'identification de page normale dans l'image normale ne correspondent pas aux informations d'identification de page d'inspection dans l'image d'inspection, et il existe une autre image normale utilisée ayant les informations d'identification de page normale qui correspondent aux informations d'identification de page d'inspection, sélectionner l'image normale comme une image normale d'un matériel imprimé suivant qui est imprimé après le matériel imprimé.

4. Système de traitement d'informations selon la revendication 3, dans lequel le processeur est configuré pour :
enregistrer le matériel imprimé comme une page en double.

5. Système de traitement d'informations selon l'une quelconque des revendications 1 à 4, dans lequel le processeur est configuré pour :
dans un cas où les informations d'identification de page normale dans l'image normale ne correspondent pas aux informations d'identification de page d'inspection dans l'image d'inspection, et il n'existe aucune autre image normale ayant les informations d'identification de page normale qui correspondent aux informations d'identification de page d'inspection, sélectionner l'image normale comme une image normale d'un matériel imprimé suivant qui est imprimé après le matériel imprimé.

6. Système de traitement d'informations selon la revendication 5, dans lequel le processeur est configuré pour :
enregistrer le matériel imprimé comme une page erronée.

7. Système de traitement d'informations selon l'une quelconque des revendications 1 à 6, dans lequel le processeur est configuré pour :
définir une image partielle dans l'image normale comme les informations d'identification de page normale ; et
définir une image partielle dans l'image d'inspection lue à partir du matériel imprimé comme les informations d'identification de page d'inspection.

8. Système de traitement d'informations selon la revendication 7, dans lequel le processeur est configuré pour :
définir une image à la même position que les informations d'identification de page normale parmi des images d'inspection lues à partir du matériel imprimé, comme les informations d'identification de page d'inspection.

9. Programme de traitement d'informations amenant un ordinateur à exécuter un processus comprenant :
déterminer, dans un cas où des informations d'identification de page normale dans une image normale sélectionnée séquentiellement parmi une pluralité d'images normales correspondent à des informations d'identification de page d'inspection dans une image d'inspection lue à partir d'un matériel imprimé, une qualité d'impression de l'image d'inspection en utilisant l'image normale ; et
déterminer, dans un cas où les informations d'identification de page normale dans l'image normale ne correspondent pas aux informations d'identification de page d'inspection dans l'image d'inspection, et il existe une autre image normale non utilisée ayant les informations d'identification de page normale qui correspondent aux informations d'identification de page d'inspection, la qualité d'impression de l'image d'inspection, sur la base de l'autre image normale.

10. Procédé de traitement d'informations comprenant :
déterminer, dans un cas où des informations d'identification de page normale dans une image normale sélectionnée séquentiellement parmi une pluralité d'images normales correspondent à des informations d'identification de page d'inspection dans une image d'inspection lue à partir d'un matériel imprimé, une qualité d'impression de l'image d'inspection en utilisant l'image normale ; et
déterminer, dans un cas où les informations d'identification de page normale dans l'image normale ne correspondent pas aux informations d'identification de page d'inspection dans l'image d'inspection, et il existe une autre image normale non utilisée ayant les informations d'identification de page normale qui correspondent aux informations d'identification de page d'inspection, la qualité d'impression de l'image d'inspection, sur la base de l'autre image normale.
